# EUROPEAN PATENT APPLICATION

(11) **EP 4 819 074 A1**
(43) Date of publication of application: **07.10.2026**
(21) Application number: 26168508.5
(22) Date of filing: 27.03.2026
(51) Int. Cl.: G06V 20/58, G06V 10/82, G06F 40/10

(54) **ELECTRONIC DEVICE, METHOD, AND NON-TRANSITORY COMPUTER READABLE STORAGE MEDIUM FOR OBTAINING INFORMATION RELATED TO STATE OF EXTERNAL OBJECT USING ARTIFICIAL INTELLIGENCE MODEL**

(30) Priority: 02.04.2025 KR 20250042935; 24.03.2026 KR 20260053289
(71) Applicant: Thinkware Corporation, Seongnam-si, Gyeonggi-do 13493 (KR)
(72) Inventor: PARK, Dongwoo, 13493 Seongnam-si (KR); KO, Sukpil, 13493 Seongnam-si (KR)
(74) Representative: Kim Kang, Jae Hee

(57) **Abstract**

An electronic device includes a camera, memory, and a processor. The processor is configured to obtain an image using the camera, obtain spatial information regarding an external space at a time when the image is obtained using the image, obtain state information regarding an object included in the external space using the spatial information, obtain a first text describing a motion of the object by executing a first language model using the state information, and obtain a second text describing the image by executing a second language model using the first text and the image.

## Description

### [Technical Field]

The present disclosure relates to an electronic device, a method, and a non-transitory computer readable storage medium for obtaining information related to a state of an external object using an artificial intelligence model.

### [Background Art]

An electronic device and/or a service based on object recognition technology, including an algorithm for inferring an external object captured in an image, is being developed. For example, based on the object recognition technology, one or more external objects (e.g., a pedestrian or a vehicle) may be recognized from an image. Information on the recognized one or more external objects may be used to automate and/or replace an action of a user according to the external object, such as automatic driving.

The above-described information may be provided as a related art for the purpose of helping understanding of the present disclosure. No argument or decision is made as to whether any of the above description may be applied as a prior art related to the present disclosure.

### [Detailed Description]

### [Technical Solution]

An electronic device is provided. The electronic device may comprise a camera. The electronic device may comprise memory. The electronic device may comprise a processor. The processor may be configured to obtain an image using the camera. The processor may be configured to obtain spatial information regarding an external space at a time when the image is obtained using the image. The processor may be configured to obtain state information regarding an object included in the external space using the spatial information. The processor may be configured to obtain a first text describing a motion of the object by executing a first language model using the state information. The processor may be configured to obtain a second text describing the image by executing a second language model using the first text and the image.

A method is provided. The method may be executed by an electronic device including a camera. The method may comprise obtaining an image using the camera. The method may comprise obtaining spatial information regarding an external space at a time when the image is obtained using the image. The method may comprise obtaining state information regarding an object included in the external space using the spatial information. The method may comprise obtaining a first text describing a motion of the object by executing a first language model using the state information. The method may comprise obtaining a second text describing the image by executing a second language model using the first text and the image.

A non-transitory computer readable storage medium is provided. The non-transitory computer readable storage medium may store one or more programs. The one or more programs may comprise instructions to, when executed by a processor of an electronic device including a camera, cause the electronic device to obtain an image using the camera. The one or more programs may comprise instructions to, when executed by the processor cause the electronic device to obtain spatial information regarding an external space at a time when the image is obtained using the image. The one or more programs may comprise instructions to, when executed by the processor cause the electronic device to obtain state information regarding an object included in the external space using the spatial information. The one or more programs may comprise instructions to, when executed by the processor cause the electronic device to obtain a first text describing a motion of the object by executing a first language model using the state information. The one or more programs may comprise instructions to, when executed by the processor cause the electronic device to obtain a second text describing the image by executing a second language model using the first text and the image.

### [Brief Description of the Drawings]

FIG. 1 illustrates a language model for obtaining information regarding a state of an object according to a comparative example.
FIG. 2 is a schematic view of an exemplary electronic device.
FIG. 3 illustrates objects located outside a vehicle.
FIG. 4 is a flowchart illustrating an operation of an electronic device for obtaining information related to a state of an object.
FIG. 5 is a diagram for describing a system of an electronic device for obtaining information related to a state of an object.
FIG. 6 illustrates an exemplary operation of an electronic device for obtaining data for vehicle control from state information of an object.
FIG. 7 illustrates an exemplary operation of an electronic device for obtaining data for notifying a user of an anomaly from state information of an object.
FIG. 8 is a flowchart illustrating an operation of an electronic device for obtaining a text related to a state of an object by using a language model.
FIG. 9 is a diagram for describing data exchange between language models.
FIG. 10 illustrates an example of a block diagram illustrating an autonomous driving system of a vehicle according to an embodiment.
FIG. 11 and FIG. 12 illustrate an example of a block diagram illustrating an autonomous driving moving object according to an embodiment.
FIG. 13 illustrates an example of a gateway related to a user device according to various embodiments.
FIG. 14 is a diagram for describing an operation of an electronic device for training a neural network based on a set of training data according to an embodiment.
FIG. 15 is a block diagram of an electronic device according to an embodiment.

### [Mode(s) for Carrying Out the Invention]

Specific structural or functional descriptions of embodiments according to a concept of the present invention disclosed in the present specification are exemplified only for a purpose for describing embodiments according to the concept of the present invention, and embodiments according to the concept of the present invention may be implemented in various forms and are not limited to embodiments described in the present specification.

Since embodiments according to the concept of the present invention may apply various changes and have various forms, embodiments will be exemplified in the drawings and described in detail in the present specification. However, this is not intended to limit embodiments according to the concept of the present invention to specific disclosure forms, and includes a modification, an equivalent, or a substitute included in a spirit and technical scope of the present invention.

Although terms such as first or second may be used to describe various components, the components should not be limited by the terms. The terms are used for a purpose of distinguishing one component from another component, and for example, without departing from a scope of rights according to the concept of the present invention, a first component may be referred to as a second component and similarly the second component may also be referred to as the first component.

When a component is mentioned to be "connected" or "accessed" to another component, it should be understood that it may be directly connected or accessed to the another component, but another component may exist in a middle. On the other hand, when a component is mentioned to be "directly connected" or "directly connected" to another component, it should be understood that no other component exists in the middle. Expressions that describe a relationship between components, such as "between" and "directly between" or "directly adjacent to", and the like, should be interpreted in the same manner.

A term used in the present specification is used only to describe specific embodiments and is not intended to limit the present invention. A singular expression includes a plural expression unless context clearly indicates otherwise. In the present specification, a term such as "include" or "have", and the like are intended to be designated as existence of a described feature, number, step, operation, component, part, or combination thereof and should be understood not to pre-exclude a possibility of the existence or addition of one or more other features, number, step, operation, component, part, or combination thereof.

Unless otherwise defined, all terms used herein, including technical or scientific terms, have the same meaning as commonly understood by a person of ordinary skill in the art to which the present invention belongs. Terms defined in commonly used dictionaries should be interpreted as having a meaning consistent with the meaning of context of relevant technology, and are not interpreted in an ideal or overly formal sense unless explicitly defined in the present specification.

Hereinafter, embodiments will be described in detail with reference to the accompanying drawings. However, a scope of a patent application is not limited or restricted by these embodiments. The same reference numerals presented in each drawing may indicate the same configuration, and overlapping descriptions thereof may be omitted.

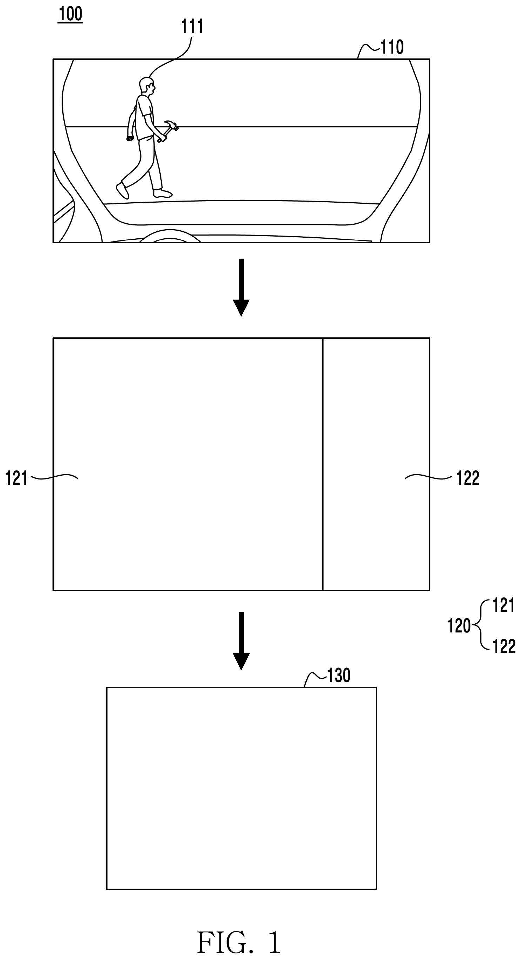

FIG. 1 illustrates a language model for obtaining information regarding a state of an object according to a comparative example.

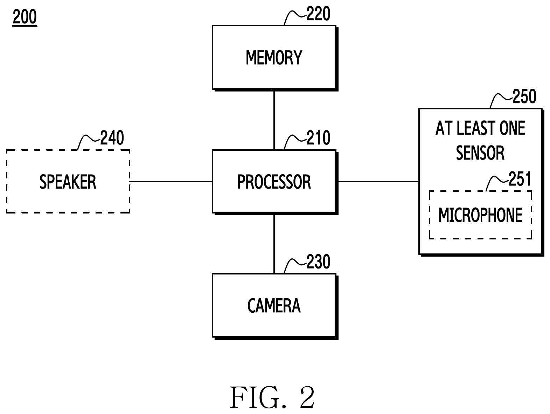

Referring to FIG. 1, an electronic device (e.g., an electronic device 200 of FIG. 2) may include a system 100 for providing information regarding an external object to a user. The system 100 may include a language model 120. The electronic device may obtain output data 130 from an image 110 by driving the system 100. The image 110 may be obtained through a camera (e.g., a camera 230 of FIG. 2) of the electronic device.

The electronic device 200 may generate the output data 130 by performing an operation of the language model 120 based on the image 110. The language model 120 may include a plurality of models. For example, the language model 120 may include a first model 121 and a second model 122. For example, the first model 121 may be referred to as a pre-trained model. For example, the second model 122 may be referred to as a model for additionally learning a parameter for predicting a motion of an object 111 included in the image 110 corresponding to the external object. The parameter additionally learned by the second model 122 may be applied to the first model 121.

A form of the output data 130 may be various. For example, the output data 130 may include an image and/or a text for notifying the user of the motion of the object 111 predicted through the system 100. For example, the output data 130 may be displayed through a display of the electronic device or may be output through a speaker (e.g., a speaker 240 of FIG. 2) of the electronic device.

The system 100 may predict motions of external objects through the language model 120 capable of additional learning. However, since the language model 120 should be trained independently for each of the external objects, a cost for constructing the system 100 for predicting the motions of the external objects may increase. Accordingly, a new system for predicting (or identifying) the motions of the external objects may be required.

FIG. 2 is a schematic view of an exemplary electronic device.

An electronic device 200 (or an external electronic device) according to various embodiments disclosed in the present document may be a device of various forms. The electronic device 200 may include, for example, a computer device, a portable multimedia device, a camera (e.g., a dash cam), a wearable device, a server, or a home appliance. The electronic device 200 (or the external electronic device) according to embodiments of the present document is not limited to the above-described devices.

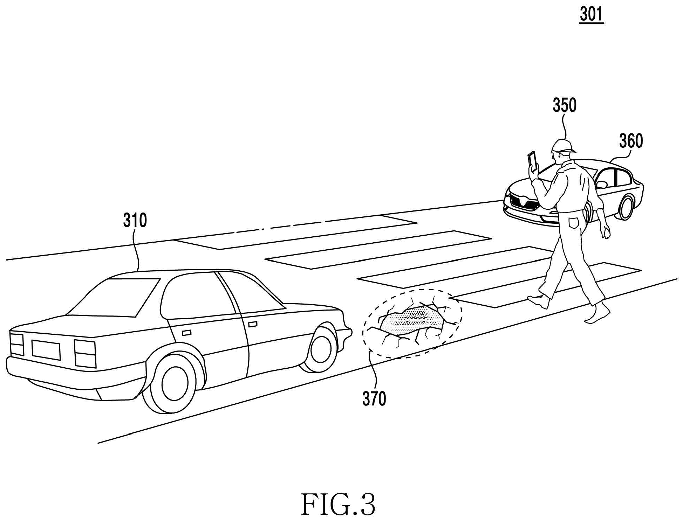

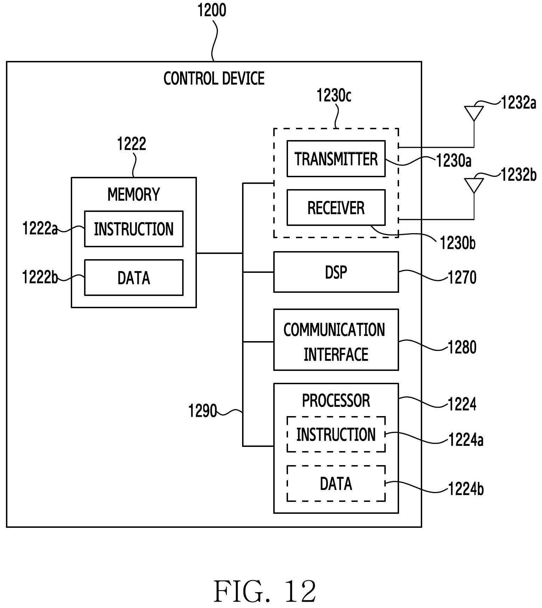

Referring to FIG. 2, it may include the electronic device 200 included in a vehicle (e.g., a vehicle 310 of FIG. 3). For example, the electronic device 200 may be mounted on the vehicle 310. For example, the electronic device 200 may correspond to a device (e.g., a dash cam) attached to the vehicle 310, or may be included in the device. However, the present disclosure is not limited thereto. For example, the electronic device 200 may be built-in in the vehicle 310. For example, the electronic device 200 may correspond to an electronic control unit (ECU) of the vehicle 310, or may be included in the ECU. The ECU may be referred to as an electronic control module (ECM). The electronic device 200 of FIG. 1 may include at least a portion of a control device 1200 of FIG. 12 or may correspond to at least a portion of the control device 1200 of FIG. 12.

The electronic device 200 may include a processor 210, memory 220, a camera 230, and at least one sensor 250.

The processor 210 may include a hardware component for processing data by using instructions stored in the memory 220. The hardware component for processing data may include a central processing unit (CPU) (e.g., including processing circuitry). The hardware component for processing data may include a graphic processing unit (GPU) (e.g., including processing circuitry). The hardware component for processing data may include a display processing unit (DPU) (e.g., including processing circuitry). The hardware component for processing data may include a neural processing unit (NPU) (e.g., including processing circuitry). The processor 210 may include one or more cores. For example, the processor 210 may have a structure of a multicore processor such as a dual core, a quad core, or a hexa core. As a non-limiting example, the processor 210 may perform at least a portion of operations described in the present disclosure by using an artificial intelligence model (e.g., a generative artificial intelligence model).

The processor 210 may control the memory 220 and/or one or more components (e.g., the camera 230, a speaker 240, and/or the at least one sensor 250) of the electronic device 200. For example, the processor 210 may include at least a portion of a processor 1224 of FIG. 12 or may correspond to at least a portion of the processor 1224 of FIG. 12.

The memory 220 may include one or more storage media (or storage mediums). For example, the one or more storage media may include a permanent memory such as a hard drive, a flash memory, or a read-only memory (ROM), a semi-permanent memory such as a random access memory (RAM), any other suitable type of storage assembly, or any combination thereof. The memory 220 may include a cache memory (e.g., may be included in the processor 210), which is a memory of one or more different types used for temporarily storing data for a function or a feature of the electronic device 200. The memory 220 may be fixedly embedded in the electronic device 200, or may be incorporated onto one or more suitable types of components (e.g., a subscriber identity module (SIM) card and/or a secure digital (SD) memory card) that may be repeatedly inserted into the electronic device 200 and removed from the electronic device 200. For example, the memory 220 may include at least a portion of memory 1222 of FIG. 12 or may correspond to at least a portion of the memory 1222 of FIG. 12.

The camera 230 may include one or more lenses and an image sensor. For example, the one or more lenses may be implemented as a lens assembly. The lens assembly may include a wide-angle lens or a telephoto lens. The one or more lenses may collect light around the camera 230 (or around the electronic device 200) to obtain an image.

For example, the image sensor in the camera 230 may convert light collected by using the one or more lenses into an electrical signal to obtain the image. The image sensor may include, for example, one image sensor selected from among image sensors having different properties such as a red, green, blue (RGB) sensor, a black and white (BW) sensor, an infrared (IR) sensor, or an ultra violet (UV) sensor, a plurality of image sensors having the same property, or a plurality of image sensors having different properties. Each image sensor included in the image sensor may be implemented, for example, by using a charged coupled device (CCD) sensor or a complementary metal oxide semiconductor (CMOS) sensor.

The electronic device 200 may include the speaker 240. The speaker 240 may output an audio signal. The speaker 240 may receive an electrical signal. The speaker 240 may include an element for obtaining the electrical signal. The speaker 240 may convert the electrical signal into a sound wave signal. The speaker 240 may include an element for converting the electrical signal into the sound wave signal. The speaker 240 may output an audio signal including the converted sound wave signal. The speaker 240 may include an element for outputting the audio signal. The speaker 240 may include at least one voice coil that provides vibration to a diaphragm in the speaker 240 and a magnet capable of forming a magnetic field. When a current flows in the at least one voice coil, a magnetic field formed by the voice coil may interact with a magnetic field formed by the magnet, thereby vibrating the voice coil. The diaphragm connected to the voice coil may vibrate based on the vibration of the voice coil. The speaker 240 may output an audio signal based on the diaphragm. The speaker 240 may not be an essential component with respect to the electronic device 200. For example, the speaker 240 may be an optional component of the electronic device 200.

The at least one sensor 250 may include one or more sensors for identifying an environment outside the vehicle (e.g., the vehicle 310 of FIG. 3) in which the electronic device 200 is included. For example, the one or more sensors may include a LiDAR sensor that emits a laser. The LiDAR sensor may detect reflected light in which the emitted laser is reflected by an external object. The LiDAR sensor may obtain data regarding a distance between the vehicle and the external object and/or a shape of the external object by detecting the reflected light. For example, the one or more sensors may include a Radar sensor that emits an electromagnetic wave (e.g., a radio wave). The Radar sensor may detect a reflected wave in which the emitted electromagnetic wave is reflected by the external object. The Radar sensor may obtain data regarding a distance between the vehicle and the external object and/or a relative speed of the vehicle with respect to the external object by detecting the reflected wave.

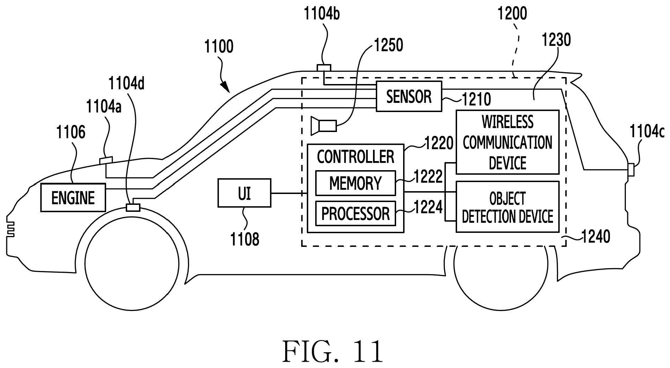

The at least one sensor 250 may include a microphone 251 for obtaining acoustic information outside the electronic device 200. For example, the microphone 251 may convert a sound wave generated from an external sound source into an electrical signal. For example, the microphone 251 may be referred to as a sensor for detecting (or identifying) a voice input of a user with respect to the external object identified by the electronic device 200. The microphone 251 may not be an essential component with respect to the electronic device 200. For example, the microphone 251 may be an optional component of the electronic device 200. For example, the at least one sensor 250 may include at least a portion of a sensor 1210 of FIG. 11 or may correspond to at least a portion of the sensor 1210 of FIG. 11.

FIG. 3 illustrates objects located outside a vehicle.

Referring to FIG. 3, an environment 301 may include a vehicle 310 and external objects. For example, the external objects may include a first external object 350, a second external object 360, and a third external object 370.

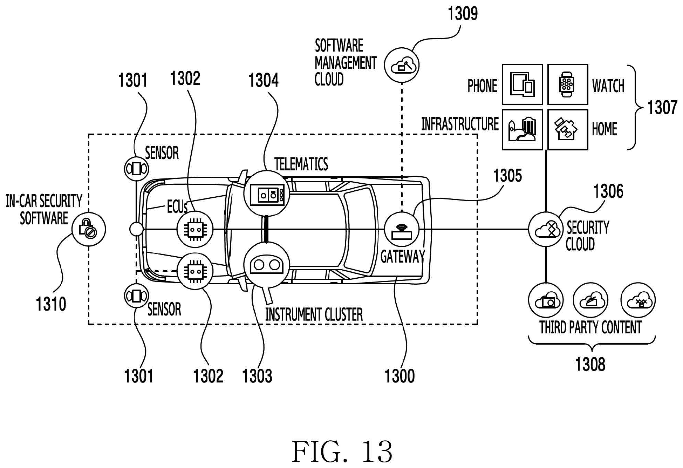

The vehicle 310 may include a moving object configured to move on a ground. For example, the vehicle 310 may include an autonomous driving moving object that travels according to a control signal received from an electronic device 200 without an operation of a driver. For example, the vehicle 310 may include a vehicle (e.g., a passenger car and/or a bus) traveling on a road. However, the present disclosure is not limited thereto. For example, the vehicle 310 may include a special-purpose cart (e.g., a golf cart, a goods transport cart, and/or ). For example, the vehicle 310 may include agricultural machinery (e.g., a tractor and/or a combine). For example, the vehicle 310 may include construction machinery. For example, the vehicle 310 of FIG. 3 may include at least a portion of a vehicle 1300 of FIG. 13 or may correspond to at least a portion of the vehicle 1300 of FIG. 13.

The external objects (e.g., the first external object 350, the second external object 360, and the third external object 370) may include physical objects of various types included in a surrounding environment (e.g., the environment 301) of the vehicle 310. For example, the first external object 350 and the second external object 360 may refer to physical objects (e.g., a pedestrian, a bicycle, a vehicle, and/or an animal) whose moving direction and speed change. For example, the third external object 370 may refer to a stationary physical object (e.g., a sign, a speed bump, and/or an obstacle). For example, the external object may be described as an object that the vehicle 310 may not physically pass through or an object having a risk of body damage or rollover when passing.

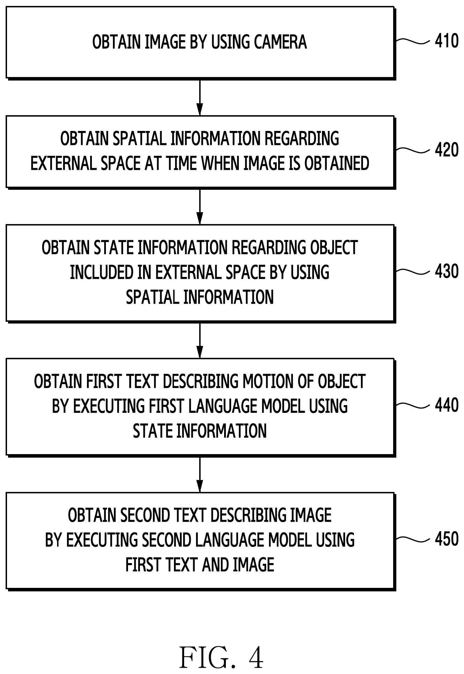

The electronic device 200 may include an artificial intelligence model for predicting a state of an object (e.g., an external object). The electronic device 200 may provide various services (e.g., autonomous driving, or a theft notification) to a user by using information obtained through the artificial intelligence model. An operation of the electronic device 200 for obtaining information related to a state of the object will be described with reference to FIG. 4.

FIG. 4 is a flowchart illustrating an operation of an electronic device for obtaining information related to a state of an object.

This operation may be performed by the electronic device 200 illustrated in FIG. 2 or by the processor 210 of the electronic device 200. In the following embodiments, each operation may be performed sequentially, but is not necessarily performed sequentially. For example, an order of each operation may be changed, and at least two operations may be performed in parallel.

Referring to FIG. 4, in operation 410, the processor 210 may obtain an image by using a camera (e.g., the camera 230 of FIG. 2). For example, the image may include at least a portion of the image according to a viewing angle of the camera or may correspond to at least a portion of the image according to the viewing angle. For example, the processor 210 may obtain the image by capturing an external space of a vehicle through the camera while the vehicle in which the electronic device 200 is included travels.

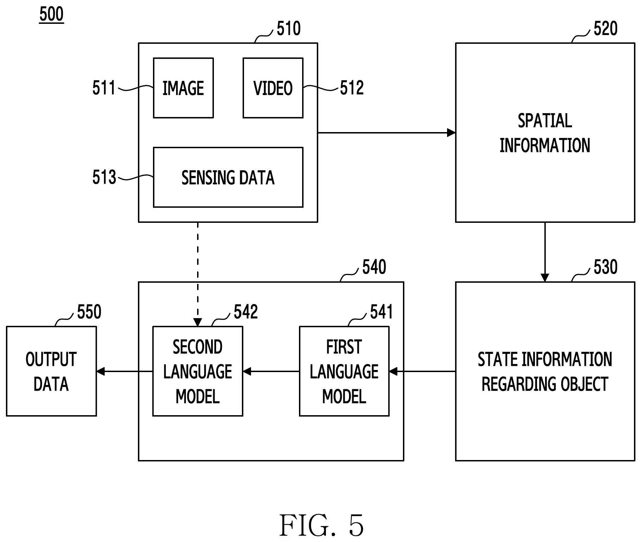

In operation 420, the processor 210 may obtain spatial information (e.g., spatial information 520 of FIG. 5) regarding the external space at a time when the image is obtained.

The spatial information regarding the external space may include location information of an object included in the external space. For example, the location information may include information regarding a range of a space occupied by the object in the external space. As a non-limiting example, the location information may be represented as coordinate data on a three-dimensional coordinate set based on the electronic device 200.

The spatial information regarding the external space may include time information. For example, since the processor 210 obtains data regarding a time when the image is captured from the camera, the spatial information may include time (or time point) information. Since the spatial information includes the location information and the time information, the spatial information may be understood or referred to as four-dimensional information. Since the spatial information includes the time information, information or data obtained by using the spatial information may be processed in a time series by a system (e.g., the system 500 of FIG. 5) of the electronic device 200.

The processor 210 obtaining the spatial information of the external space by using the image may include an operation of distinguishing an object included in the external space. For example, the processor 210 may identify a type of the object by using an image segmentation technique. For example, the image segmentation technique may be described as a technique for identifying a type of an object corresponding to an object by separating pixels of the object included in a video (or an image). For example, the electronic device 200 may distinguish the object included in the external space by performing the image segmentation technique by using a software program or an AI model.

In operation 430, the processor 210 may obtain state information (e.g., state information 530 regarding an object of FIG. 5) regarding the object included in the external space by using the spatial information. For example, the object may be understood or referred to as a unit that distinguishes all elements (e.g., a road, a sidewalk, vegetation) included in the external space according to a preset criterion. The object may include a single object and/or a region of the external space. For example, the single object may include a moving object (e.g., the first external object 350 and the second external object 360 of FIG. 3) and/or a stationary object (e.g., the third external object 370 of FIG. 3). For example, the region may include a drivable region (e.g., a road) and/or a non-drivable region (e.g., a sidewalk) of the vehicle (e.g., the vehicle 310 of FIG. 3) including the electronic device 200.

The state information may include information for predicting a motion of the object. For example, the state information may include a movement trajectory of the object, a relative location of the object with respect to the electronic device 200, an operation of the object, and/or a size of the object, but is not limited thereto. For example, the state information may include all information that may be used to predict or identify a state of the object after a time when the image is obtained.

In the operation 430, the processor 210 may identify a feature of the object by using the spatial information. The state information obtained by the processor 210 may be distinguished according to a feature of the identified object. As a non-limiting example, the feature may include a shape of the object and a speed of the object.

The processor 210 may obtain the state information of the object based on identifying the feature of the object. As a non-limiting example, in a case that the identified object is a person, the obtained state information may include information regarding a motion (e.g., kicking, looking at a smartphone, or standing), a location, a posture, and a movement trajectory. As a non-limiting example, in a case that the identified object is a vehicle, the obtained state information may include information regarding a state (e.g., traveling, stopping, parking) of the vehicle, a movement trajectory, and a driving pattern. As a non-limiting example, in a case that the identified object is an obstacle (e.g., a pothole, or a speed bump), the obtained state information may include information regarding a surface, a size, and a degree of risk of the obstacle.

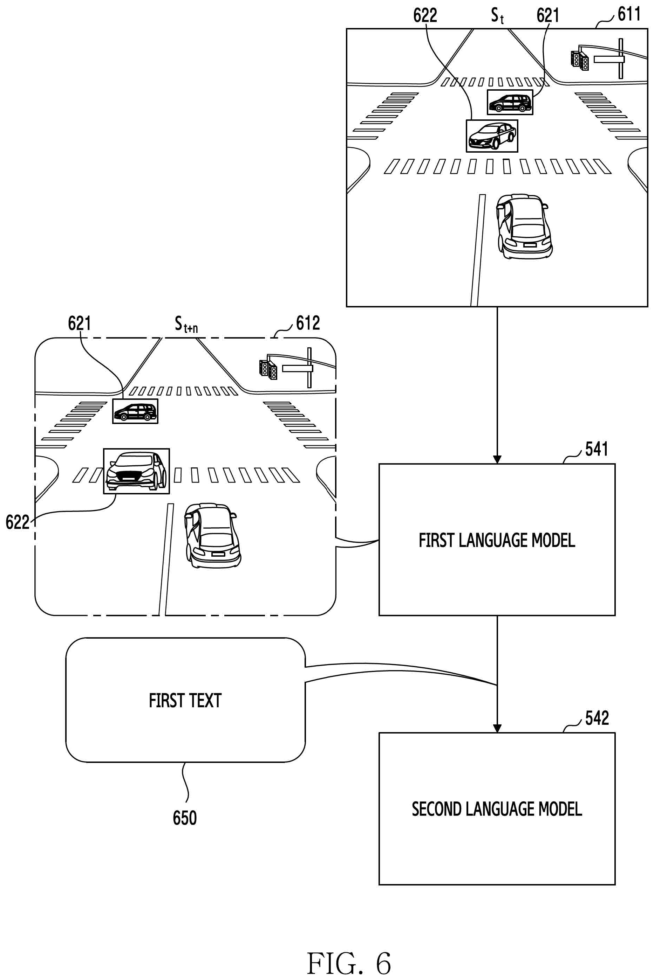

In operation 440, the processor 210 may obtain a first text (e.g., a first text 650 of FIG. 6) describing a motion of the object by executing a first language model (e.g., the first language model 541 of FIG. 5) using the state information. For example, the first language model may be referred to as a model for predicting state information of the object at a next time by tokenizing the state information of the object. The first language model may generate the first text by mapping the predicted state information to a word (or a linguistic expression).

The first language model may correspond to a physics-informed model for predicting a state of the object or may include the physics-informed model. For example, the first language model may predict the state information (or a state) of the object at the next time by processing the input state information based on a physical law (e.g., an acceleration law, or a thermodynamic law). For example, the first language model may include a simulator that models a physical phenomenon according to the state information of the object. The first language model processes input data by using the physical law, and thus may be referred to as a physical LLM.

In operation 450, the processor 210 may obtain a second text describing the image by executing a second language model (e.g., a second language model 542 of FIG. 5) using the first text and the image. For example, the processor 210 may obtain, through the second language model, the second text describing a state and/or a motion of an object corresponding to the object included in the image after a time when the image is obtained.

In operation 450, the processor 210 may generate information for providing various services to a user based on the second text.

According to an embodiment, the processor 210 may generate driving information for controlling the vehicle (e.g., the vehicle 310 of FIG. 3) in which the electronic device 200 is included by using the second text. The processor 210 may provide a service related to driving (e.g., autonomous driving) to the user by controlling a motor and/or an engine (e.g., an engine 1106 of FIG. 11) by using the driving information.

According to an embodiment, the processor 210 may generate guidance information for notifying the user of an anomaly due to an object by using the second text. For example, the anomaly caused by the object may include damage to the vehicle (e.g., the vehicle 310 of FIG. 3) caused by the object and theft of the vehicle. As a non-limiting example, the processor 210 may control a speaker (e.g., the speaker 240 of FIG. 2) included in the electronic device 200 by using the guidance information, to notify the user of the anomaly caused by the object.

However, it is not limited thereto. According to an embodiment, the processor 210 may generate information for providing various services to the user based on the second text and a user input. For example, the processor 210 may generate information for controlling the vehicle (e.g., the vehicle 310 of FIG. 3) by using the second text and the user input. The processor 210 may provide a service for assisting driving (e.g., autonomous driving, or automatic parking) to the user by controlling the motor and/or the engine (e.g., the engine 1106 of FIG. 11) using the information. As a non-limiting example, the user input may be received by a microphone (e.g., the microphone 251 of FIG. 2) of the electronic device 200.

The electronic device 200 may include an AI system (e.g., the system 500 of FIG. 5) for obtaining information related to a state of the object. The AI system will be described with reference to FIG. 5.

FIG. 5 is a diagram for describing a system of an electronic device for obtaining information related to a state of an object.

Referring to FIG. 5, an electronic device 200 may include a system 500 for generating output data 550 from various inputs 510. The output data 550 may correspond to at least a portion of the second text of FIG. 4 or may include at least a portion of the second text of FIG. 4.

The various inputs 510 may be referenced or be referred to as multimodal inputs. The various inputs 510 may include an image 511, a video 512, and/or sensing data 513. For example, the image 511 may include an image obtained through a camera (e.g., the camera 230 of FIG. 2). For example, the video 512 may include a set of images continuously captured through the camera. For example, the sensing data 513 may include data obtained through at least one sensor (e.g., the at least one sensor 250 of FIG. 2).

The processor 210 may obtain (or generate) spatial information 520 from the various inputs 510 by driving the system 500. For example, the processor 210 may obtain spatial information regarding an external space (e.g., a space outside a vehicle) corresponding to a time when the various inputs 510 are obtained by driving the system 500. For example, the system 500 may generate the spatial information 520 through a mathematical operation using a first software program, but is not limited thereto. For example, the system 500 may generate the spatial information 520 from the various inputs 510 through an operation of an AI model. For example, a description of the spatial information may be referred to as a description of the spatial information of FIG. 4.

The processor 210 may obtain state information 530 regarding an object from the spatial information 520 by driving the system 500. For example, the system 500 may generate the state information through a mathematical operation using a second software program, but is not limited thereto. For example, the system 500 may generate the state information 530 regarding the object from the spatial information 520 through an operation of the AI model. For example, the state information 530 may be referred to as information generated based on the spatial information 520 at a time when the various inputs 510 are obtained by the processor 210 or at a time when the various inputs 510 are input (or injected) into the system 500. That is, the state information 530 may include information or a parameter related to time (or a time point). For example, a description of the state information 530 may be referred to as a description of the state information of FIG. 4.

The system 500 may include a sub-system 540 for generating the output data 550. The sub-system 540 may include a first language model 541 and a second language model 542. Since the sub-system 540 includes a plurality of language models, the sub-system 540 may be referred to as an integrated model.

The electronic device 200 may obtain first data based on the first language model 541 by driving the system 500. For example, in the system 500, the state information 530 regarding the object may be input (or injected) into the first language model 541. The system 500 may generate, through the first language model 541, the first data for describing a state or a motion of the object from the state information 530. The first data may correspond to the first text of FIG. 4. The system 500 may transmit the first data output from the first language model 541 to the second language model 542.

The electronic device 200 may obtain the output data 550 based on the second language model 542 by driving the system 500. For example, in the system 500, the first data generated by the first language model 541 may be input (or injected) into the second language model 542. The system 500 may generate, through the second language model 542 the output data 550 for describing the various inputs 510 from the first data. The output data 550 may correspond to the second text of FIG. 4.

In the system 500, a path for inputting (or injecting) data (or information) into the second language model may be various. The path may include a first path and a second path. For example, the first path may refer to a path in which the first data generated as the various inputs 510 are sequentially processed by an operation through a software program and the first language model 541 is input into the second language model 542. For example, the second path may refer to a path in which the various inputs 510 are directly input into the second language model 542. However, in the system 500, the second path may not be an essential configuration. For example, the second path may be an optional configuration of the system 500.

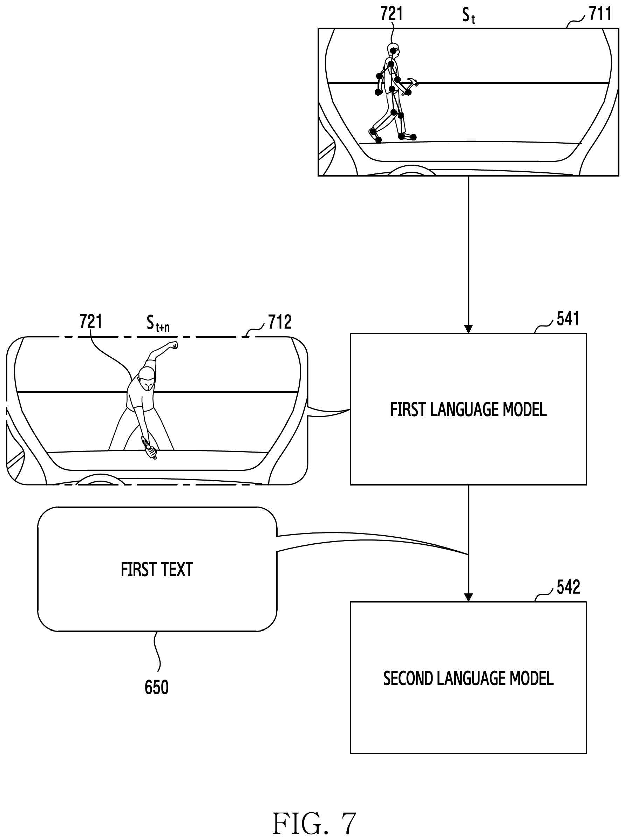

The first language model 541 included in the system 500 may predict and generate next state information (or a state) of the object based on the state information regarding the object. An operation of the electronic device for predicting a state of the object through the first language model 541 will be described with reference to FIG. 6 and FIG. 7.

FIG. 6 illustrates an exemplary operation of an electronic device for obtaining data for vehicle control from state information of an object.

Referring to FIG. 6, an example 611 may be described as an example displaying Sₜ, which is state information regarding an object at a time t. For example, a first language model 541 may predict Sₜ₊ₙ, which is state information after n seconds from the time t, by receiving the example 611 including state information regarding a first object 621 and a second object 622 at the time t. An example 612 may be described as an example displaying Sₜ₊ₙ, which is state information regarding the object at a time t+n. The example 612 may include state information regarding the first object 621 and the second object 622 at the time t+n. As a non-limiting example, the state information regarding the first object 621 may include information regarding a state (e.g., traveling, stopping, or parking), a movement trajectory, and a driving pattern of the first object 621. As a non-limiting example, the state information regarding the second object 622 may include information regarding a state (e.g., traveling, stopping, or parking), a movement trajectory, and a driving pattern of the second object 622.

The first language model 541 may predict Sₜ₊ₙ, which is the state information of the object at the time t+n, from Sₜ, which is the state information of the object at the time t, based on a physical law. The first language model 541 may generate a first text 650 for describing the example 612 displaying St+n, which is the predicted state information of the object. For example, the first language model 541 may generate the first text 650 by mapping predicted state information of each of the first object 621 and the second object 622 included in the example 612 to a word (or a linguistic expression). The first text 650 may be referred to as a text describing a state or a motion of the first object 621 and the second object 622.

The electronic device 200 may transmit the first text 650 generated in the first language model 541 to a second language model 542 by driving a system (e.g., the system 500 of FIG. 5). The first text 650 may be referred to as an input to the second language model 542 in the system. The electronic device 200 may obtain a second text used for controlling a vehicle by performing an operation of the second language model 542 based on the first text 650. For example, the electronic device 200 may generate driving information for controlling the vehicle such that the vehicle (e.g., the vehicle 310 of FIG. 3) travels while avoiding the first object 621 and the second object 622 by using the second text.

FIG. 7 illustrates an exemplary operation of an electronic device for obtaining data for notifying a user of an anomaly from state information of an object.

Referring to FIG. 7, an example 711 may be described as an example displaying Sₜ, which is state information regarding an object at a time t. For example, a first language model 541 may predict Sₜ₊ₙ, which is state information after n seconds from the time t, by receiving the example 711 including state information regarding a third object 721 at the time t. An example 712 may be described as an example displaying Sₜ₊ₙ, which is state information regarding the object at a time t+n. The example 712 may include state information regarding the third object 721 at the time t+n. As a non-limiting example, the state information regarding the third object 721 may include information regarding a motion (e.g., kicking, looking at a smartphone, or standing), a location, a posture, and a movement trajectory of the third object 721. For example, the information regarding the posture may be referred to as skeleton data.

The first language model 541 may predict Sₜ₊ₙ, which is the state information of the object at the time t+n, from Sₜ, which is the state information of the object at the time t, based on a physical law. The first language model 541 may generate a first text 650 for describing the example 712 displaying Sₜ₊ₙ, which is the predicted state information of the object. For example, the first language model 541 may generate the first text 650 by mapping the predicted state information of the third object 721 included in the example 712 to a word (or a linguistic expression). The first text 650 may be referred to as a text describing a state or a motion of the third object 721.

The electronic device 200 may transmit the first text 650 generated in the first language model 541 to a second language model 542 by driving a system (e.g., the system 500 of FIG. 5). The first text 650 may be referred to as an input to the second language model 542 in the system. The electronic device 200 may obtain a second text used for notifying a user of an anomaly (or a risk) due to the object by performing an operation of the second language model 542 based on the first text 650. For example, the electronic device 200 may generate guidance information for notifying the user of damage applied or to be applied to a vehicle (e.g., the vehicle 310 of FIG. 3) by the third object 721 using the second text.

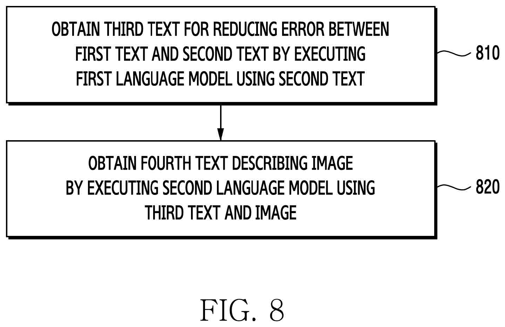

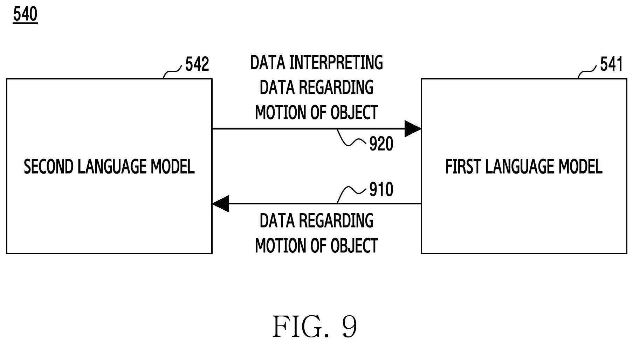

In the system (e.g., the system 500 of FIG. 5) of the electronic device 200, the first language model 541 and the second language model 542 may exchange information (or data). An operation for feeding back information (or data) generated in the second language model 542 to the first language model 541 by the electronic device 200 will be described with reference to FIG. 8 and FIG. 9.

FIG. 8 is a flowchart illustrating an operation of an electronic device for obtaining a text related to a state of an object by using a language model.

Referring to FIG. 8, in operation 810, a processor 210 may obtain a third text for reducing an error between a first text (e.g., the first text 650 of FIG. 6) and a second text by executing a first language model (e.g., the first language model 541 of FIG. 5) using the second text. For example, the processor 210 may calculate a similarity between tokens (e.g., words) configuring the first text and tokens configuring the second text through the first language model. The processor 210 may identify the error (or a difference) between the first text and the second text based on the calculated similarity. The processor 210 may obtain the third text for guiding a second language model to reduce the error between the first text and the second text by performing an operation of the first language model based on the error.

In operation 820, the processor 210 may obtain a fourth text describing an image by executing the second language model using the third text and the image. For example, an accuracy with which the fourth text describes an actual operation (or a behavior) of an object corresponding to an object included in the image (e.g., the image 511 of FIG. 5) may be higher than an accuracy with which the second text describes the actual operation (or the behavior) of the object. For example, a service (e.g., autonomous driving, or a theft alarm) provided to a user by using information generated by the processor 210 through the fourth text may have improved quality compared to a service provided to the user by using information generated by the processor 210 through the second text.

The operations 810 to 820 may be repeatedly performed such that a text generated through the second language model may accurately describe various inputs (e.g., various inputs 510 of FIG. 5).

FIG. 9 is a diagram for describing data exchange between language models.

Referring to FIG. 9, a sub-system 540 may include a first language model 541 and a second language model 542. The processor 210 may generate data 910 regarding a motion of an object by performing an operation of the first language model 541 based on state information regarding the object (e.g., state information 530 regarding the object). The data 910 regarding the motion of the object may include the first text 650 of FIG. 6. In the sub-system 540, the data 910 regarding the motion of the object may be transmitted from the first language model 541 to the second language model 542.

The processor 210 may generate data 920 interpreting the data 910 regarding the motion of the object by performing an operation of the second language model 542 based on the data 910 regarding the motion of the object. The data 920 interpreting the data 910 regarding the motion of the object may include the second text of FIG. 8. In the sub-system 540, the data 920 interpreting the data 910 regarding the motion of the object may be transmitted from the second language model 542 to the first language model 541.

In the sub-system 540, exchange of data (e.g., the data 910 regarding the motion of the object, the data 920 interpreting the data 910 regarding the motion of the object) occurring between the first language model 541 and the second language model 542 may be repeatedly performed. For example, the sub-system 540 may include a feedback loop for exchanging data between the first language model 541 and the second language model 542. The processor 210 may generate a text for describing various inputs (e.g., the various inputs 510 of FIG. 5) by performing an operation of the second language model 542 that has repeatedly exchanged data with the first language model 541 through the feedback loop. An accuracy with which the text describes the various inputs may be higher than an accuracy with which a text generated without the feedback loop describes the various inputs.

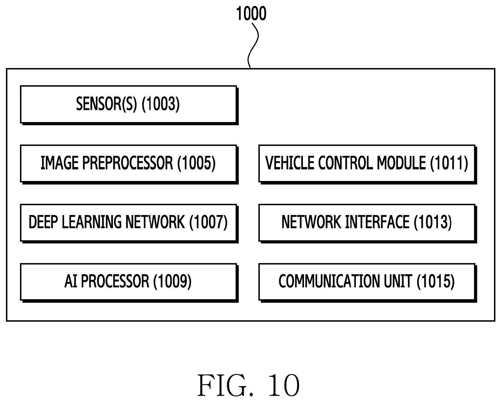

FIG. 10 illustrates an example of a block diagram illustrating an autonomous driving system of a vehicle according to an embodiment.

The autonomous driving system 1000 of the vehicle according to FIG. 10 may be a deep learning network including sensors 1003, an image pre-processor 1005, a deep learning network 1007, an artificial intelligence (AI) processor 1009, a vehicle control module 1011, a network interface 1013, and a communication unit 1015. In various embodiments, each of elements may be connected through various interfaces. For example, sensor data sensed and outputted by the sensors 1003 may be fed to the image pre-processor 1005. The sensor data processed by the image pre-processor 1005 may be fed to the deep learning network 1007 run on the AI processor 1009. An output of the deep learning network 1007 run by the AI processor 1009 may be fed to the vehicle control module 1011. Intermediate results of the deep learning network 1007 run on the AI processor 1009 may be fed to the AI processor 1009. In various embodiments, the network interface 1013 delivers autonomous driving route information and/or autonomous driving control commands for autonomous driving of the vehicle to internal block configurations, by performing communication with an electronic device (e.g., the electronic device 200 of FIG. 2) in the vehicle. In an embodiment, the network interface 1013 may be used to transmit the sensor data obtained through the sensor(s) 1003 to an external server. In some embodiments, the autonomous driving control system 1000 may include additional or fewer components as appropriate. For example, in some embodiments, the image pre-processor 1005 may be an optional component. For another example, a post-processing component (not illustrated) may be included in the autonomous driving control system 1000 to perform post-processing on the output of the deep learning network 1007 before the output is provided to the vehicle control module 1011.

In some embodiments, the sensors 1003 may include one or more sensors. In various embodiments, the sensors 1003 may be attached to different locations of the vehicle. The sensors 1003 may face one or more different directions. For example, the sensors 1003 may be attached to a front, sides, a rear, and/or a roof of the vehicle to face directions such as forward-facing, rear-facing, and side-facing. In some embodiments, the sensors 1003 may be image sensors such as high dynamic range cameras. In some embodiments, the sensors 1003 include non-visual sensors. In some embodiments, the sensors 1003 include RADAR, Light Detection And Ranging (LiDAR), and/or ultrasonic sensors in addition to an image sensor. In some embodiments, the sensors 1003 are not mounted on a vehicle having the vehicle control module 1011. For example, the sensors 1003 may be included as a portion of a deep learning system for capturing the sensor data and may be attached to an environment or a roadway and/or mounted on nearby vehicles.

In some embodiments, the image pre-processor 1005 may be used to pre-process the sensor data of the sensors 1003. For example, the image pre-processor 1005 may be used to preprocess the sensor data, to split the sensor data into one or more components, and/or to post-process one or more components. In some embodiments, the image pre-processor 1005 may be a graphics processing unit (GPU), a central processing unit (CPU), an image signal processor, or a specialized image processor. In various embodiments, the image pre-processor 1005 may be a tone-mapper processor for processing high dynamic range data. In some embodiments, the image pre-processor 1005 may be a component of the AI processor 1009.

In some embodiments, the deep learning network 1007 may be a deep learning network for implementing control commands for controlling an autonomous vehicle. For example, the deep learning network 1007 may be an artificial neural network such as a convolution neural network (CNN) trained by using the sensor data, and the output of the deep learning network 1007 is provided to the vehicle control module 1011.

In some embodiments, the artificial intelligence (AI) processor 1009 may be a hardware processor for running the deep learning network 1007. In some embodiments, the AI processor 1009 is a specialized AI processor for performing inference on the sensor data through the convolution neural network (CNN). In some embodiments, the AI processor 1009 may be optimized for a bit depth of the sensor data. In some embodiments, the AI processor 1009 may be optimized for deep learning computations, such as computations of a neural network including a convolution, a dot product, a vector and/or matrix computations. In some embodiments, the AI processor 1009 may be implemented through a plurality of graphics processing units (GPUs) capable of effectively performing parallel processing.

In various embodiments, the AI processor 1009 may be coupled, through an input/output interface, to memory configured to perform a deep learning analysis on the sensor data received from the sensor(s) 1003 while the AI processor 1009 is running and to provide an AI processor having commands that cause to determine a machine learning result used to operate the vehicle at least partially autonomously. In some embodiments, the vehicle control module 1011 may be used to process commands for vehicle control outputted from the artificial intelligence (AI) processor 1009 and translate the output of the AI processor 1009 into commands for controlling a module of each vehicle to control various modules of the vehicle. In some embodiments, the vehicle control module 1011 is used to control a vehicle for autonomous driving. In some embodiments, the vehicle control module 1011 may adjust steering and/or speed of the vehicle. For example, the vehicle control module 1011 may be used to control traveling of the vehicle such as deceleration, acceleration, steering, lane change, lane keeping, and the like. In some embodiments, the vehicle control module 1011 may generate control signals for controlling vehicle lighting, such as brake lights, turns signals, headlights, and the like. In some embodiments, the vehicle control module 1011 may be used to control vehicle audio-related systems such as a vehicle's sound system, vehicle's audio warnings, a vehicle's microphone system, a vehicle's horn system, and the like.

In some embodiments, the vehicle control module 1011 may be used to control notification systems, including warning systems to notify passengers and/or a driver of driving events, such as approach of an intended destination or a potential collision. In some embodiments, the vehicle control module 1011 may be used to adjust sensors, such as the sensors 1003 of the vehicle. For example, the vehicle control module 1011 may modify the orientation of the sensors 1003, change output resolution and/or a format type of the sensors 1003, increase or decrease a capture rate, adjust a dynamic range, and adjust a focus of the camera. In addition, the vehicle control module 1011 may turn on/off the operation of sensors individually or collectively.

In some embodiments, the vehicle control module 1011 may be used to change parameters of the image pre-processor 1005 in a method such as modifying a frequency range of filters, adjusting features and/or edge detection parameters for object detection, or adjusting channels and a bit depth, and the like. In various embodiments, the vehicle control module 1011 may be used to control autonomous driving of the vehicle and/or a driver assistance function of the vehicle.

In some embodiments, the network interface 1013 may be responsible for an internal interface between block configurations of the autonomous driving control system 1000 and the communication unit 1015. Specifically, the network interface 1013 may be a communication interface for receiving and/or transmitting data including voice data. According to various embodiments, the network interface 1013 may be connected to external servers to connect voice calls, receive and/or transmit text messages, transmit sensor data, update software of the vehicle with the autonomous driving system, or update software of the autonomous driving system of the vehicle, through the communication unit 1015.

In various embodiments, the communication unit 1015 may include various wireless interfaces of cellular or WiFi methods. For example, the network interface 1013 may be used to receive an update on operating parameters and/or commands for the sensors 1003, the image pre-processor 1005, the deep learning network 1007, the AI processor 1009, and the vehicle control module 1011 from an external server connected through the communication unit 1015. For example, a machine learning model of the deep learning network 1007 may be updated by using the communication unit 1015. According to another example, the communication unit 1015 may be used to update operating parameters of the image pre-processor 1005, such as image processing parameters, and/or firmware of the sensors 1003.

In another embodiment, the communication unit 1015 may be used to activate communications for an emergency contact and emergency services in an accident or near-accident event. For example, in a crash event, the communication unit 1015 may be used to call emergency services for assistance and may be used to externally notify emergency services of crash details and a location of the vehicle. In various embodiments, the communication unit 1015 may update or obtain an expected arrival time and/or a destination location.

According to an embodiment, the autonomous driving system 1000 illustrated in FIG. 10 may be configured with an electronic device 200 of the vehicle. According to an embodiment, when an autonomous driving release event occurs from a user during autonomous driving of the vehicle, the AI processor 1009 of the autonomous driving system 1000 may control the software of the vehicle autonomous driving to learn by controlling information related to the autonomous driving release event to be inputted as training set data of the deep learning network.

FIGS. 11 and 12 illustrate an example of a block diagram indicating an autonomous driving moving object according to an embodiment. FIG. 13 illustrates an example of a gateway related to a user device according to various embodiments.

Referring to FIG. 11, an autonomous moving object 1100 according to the present embodiment may include a control device 1200, sensing modules 1104a, 1104b, 1104c, and 1104d, an engine 1106, and a user interface 1108.

The autonomous driving moving object 1100 may have an autonomous driving mode or a manual mode. As an example, according to a user input received through the user interface 1108, it may be switched from the manual mode to the autonomous driving mode or may be switched from the autonomous driving mode to the manual mode.

In case that the autonomous driving moving object 1100 operates in the autonomous driving mode, the autonomous driving moving object 1100 may operate under control of the control device 1200.

In the present embodiment, the control device 1200 may include a controller 1220, including memory 1222 and a processor 1224, a sensor 1210, a communication device 1230, and an object detection device 1240.

Herein, the object detection device 1240 may perform all or a portion of a function of a distance measurement device.

That is, in the present embodiment, the object detection device 1240 is a device for detecting an object located outside the moving object 1100, and the object detection device 1240 may detect the object located outside the moving object 1100 and generate object information according to the detection result.

The object information may include information on existence or nonexistence of the object, location information of the object, distance information between the moving object and the object, and relative speed information between the moving object and the object.

The object may include various objects located outside the moving object 1100, such as a lane, another vehicle, a pedestrian, a traffic signal, light, a road, a structure, a speed bump, a landform, an animal, and the like. Herein, the traffic signal may be a concept including a traffic signal, a traffic sign, a pattern or text drawn on a road surface. In addition, the light may be light generated from a lamp equipped in another vehicle, light generated from a streetlamp, or sunlight.

In addition, the structure may be an object located around a road and fixed to the ground. For example, the structure may include a streetlamp, a street tree, a building, a power pole, a traffic light, and a bridge. The landform may include a mountain, a hill, and the like.

Such the object detection device 1240 may include a camera module. The controller 1220 may extract object information from an external image photographed by the camera module and enable the controller 1220 to process information thereon.

In addition, the object detection device 1240 may further include imaging devices for recognizing an external environment. RADAR, a GPS device, Odometry, and another computer vision device, an ultrasonic sensor, and an infrared sensor may be used, in addition to LIDAR, and these devices may be selected or operated simultaneously as needed to enable more precise detection.

Meanwhile, the distance measurement device according to an embodiment of the present invention may calculate a distance between the autonomous driving moving object 1100 and the object, and may control an operation of the moving object based on the distance calculated in connection with the control device 1200 of the autonomous driving moving object 1100.

As an example, in case that there is a probability of a collision according to the distance between the autonomous driving moving object 1100 and the object, the autonomous driving moving object 1100 may control a brake to lower a speed or stop. As another example, in case that the object is a moving object, the autonomous driving moving object 1100 may control a traveling speed of the autonomous driving moving object 1100 to maintain a predetermined distance or more from the object.

This distance measurement device according to an embodiment of the present invention may be configured as a module in the control device 1200 of the autonomous driving moving object 1100. That is, the memory 1222 and the processor 1224 of the control device 1200 may be configured to implement a collision prevention method according to the present invention in software.

In addition, the sensor 1210 may obtain various sensing information by connecting an internal/external environment of the moving object with the sensing modules 1104a, 1104b, 1104c, and 1104d. Herein, the sensor 1210 may include a posture sensor (e.g., a yaw sensor), a roll sensor, a pitch sensor, a collision sensor, a wheel sensor, a speed sensor, a tilt sensor, a weight detection sensor, a heading sensor, a gyro sensor, a position module, a moving object forward/rearward sensor, a battery sensor, a fuel sensor, a tire sensor, a steering sensor by handle rotation, a moving object internal temperature sensor, a moving object internal humidity sensor, an ultrasonic sensor, an illumination sensor, an accelerator pedal position sensor, a brake pedal position sensor, and the like.

Accordingly, the sensor 1210 may obtain sensing signals for moving object posture information, moving object collision information, moving object direction information, moving object location information (GPS information), moving object angle information, moving object speed information, moving object acceleration information, moving object tilt information, moving object forward/rearward information, battery information, fuel information, tire information, moving object lamp information, and moving object internal temperature information, moving object internal humidity information, a steering wheel rotation angle, moving object external illumination, a pressure applied to an accelerator pedal, a pressure applied to a brake pedal, and the like.

In addition, the sensor 1210 may further include an accelerator pedal sensor, a pressure sensor, an engine speed sensor, an air flow sensor (AFS), an intake air temperature sensor (ATS), a water temperature sensor (WTS), a throttle position sensor (TPS), a TDC sensor, a crank angle sensor (CAS), and the like.

As such, the sensor 1210 may generate moving object state information based on sensing data.

The wireless communication device 1230 is configured to implement wireless communication between the autonomous driving moving object 1100. For example, it enables the autonomous driving moving object 1100 to communicate with a mobile phone of a user, or the other wireless communication device 1230, another moving object, a central device (a traffic control device), a server, and the like. The wireless communication device 1230 may transmit and receive a wireless signal according to an access wireless protocol. A wireless communication protocol may be Wi-Fi, Bluetooth, Long-Term Evolution (LTE), Code Division Multiple Access (CDMA), Wideband Code Division Multiple Access (WCDMA), Global Systems for Mobile Communications (GSM), but the communication protocol is not limited thereto.

In addition, in the present embodiment, it is also possible for the autonomous driving moving object 1100 to implement communication between moving objects through the wireless communication device 1230. That is, the wireless communication device 1230 may perform communication with another moving object and other moving objects on the road through vehicle-to-vehicle (V2V) communication. The autonomous driving moving object 1100 may transmit and receive information such as driving warning and traffic information through the vehicle-to-vehicle (V2V) communication, and it is also possible to request information from, or receive a request from the other moving object. For example, the wireless communication device 1230 may perform the V2V communication as a dedicated short-range communication (DSRC) device or a Cellular-V2V (C-V2V) device. In addition, besides the vehicle-to-vehicle (V2V) communication, communication (e.g., Vehicle to Everything communication (V2X)) between a vehicle and another object (e.g., an electronic device carried by a pedestrian, and the like) may also be implemented through the wireless communication device 1230.

In addition, the wireless communication device 1230 may obtain information generated from various mobilities, including infrastructure (a traffic light, a CCTV, a RSU, a eNode B, and the like) located on the road or other autonomous driving/non-autonomous driving vehicles, and the like, through a non-terrestrial network other than a terrestrial network, as information for autonomous driving performance of the autonomous driving moving object 1100.

For example, the wireless communication device 1230 may perform wireless communication through a Low Earth Orbit (LEO) satellite system, a Medium Earth Orbit (MEO) satellite system, a Geostationary Orbit (GEO) satellite system, a High Altitude Platform (HAP) system, and the like, that configure a non-terrestrial network and an antenna dedicated to the non-terrestrial network mounted on the autonomous driving moving object 1100.

For example, the wireless communication device 1230 may perform wireless communication with various platforms configuring the NTN according to a 5TH Generation New Radio Non-Terrestrial Network (5G NR NTN) standard, which is currently discussed in 3GPP, and the like, but is not limited thereto.

In the present embodiment, the controller 1220 may select a platform that may properly perform NTN communication in consideration of various information such as a location of the autonomous driving moving object 1100, current time, and available power, and control the wireless communication device 1230 to perform wireless communication with the selected platform.

In the present embodiment, the controller 1220, which is a unit that controls an overall operation of each unit in the moving object 1100, may be configured by a manufacturer of the moving object when manufacturing or may be additionally configured to perform a function of autonomous driving after manufacturing. In addition, a configuration for performing a continuous additional function may be included through an upgrade of the controller 1220 configured when manufacturing. This controller 1220 may also be named an Electronic Control Unit (ECU).

The controller 1220 may collect various data from the connected sensor 1210, the object detection device 1240, the communication device 1230, and may transmit a control signal to the sensor 1210, the engine 1106, the user interface 1108, the communication device 1230, and the object detection device 1240 included in other components in the moving object based on the collected data. In addition, although not illustrated, the control signal may also be transmitted to an acceleration device, a braking system, a steering device, or a navigation device related to traveling of the moving object.

In the present embodiment, the controller 1220 may control the engine 1106, for example, may detects a speed limit of a road on which the autonomous driving moving object 1100 is traveling, and may control the engine 1106 so that a traveling speed does not exceed the speed limit or may control the engine 1106 to accelerate the traveling speed of the autonomous driving moving object 1100 in a range that does not exceed the speed limit.

In addition, when the autonomous driving moving object 1100 approaches a lane or leaves the lane while the autonomous driving moving object 1100 is traveling, the controller 1220 may determine whether such lane approaching and leaving are due to a normal traveling situation or another traveling situation, and may control the engine 1106 to control the traveling of the moving object according to the determination result. Specifically, the autonomous driving moving object 1100 may detect lanes formed on both sides of the lane in which the moving object is traveling. In this case, the controller 1220 may determine whether the autonomous driving moving object 1100 approaches the lane or leaves the lane, and if it is determined that the autonomous driving moving object 1100 approaches the lane or leaves the lane, the controller 1220 may determine whether this traveling is according to an accurate traveling situation or another traveling situation. Herein, as an example of the normal traveling situation, it may be a situation in which a lane change of the moving object is required. In addition, as an example of the other driving situations, it may be a situation in which a lane change of the moving object is not required. When it is determined that the autonomous driving moving object 1100 is approaching the lane or leaving the lane in a situation in which the moving object does not need to change lane, the controller 1220 may control the traveling of the autonomous driving moving object 1100 so that the autonomous driving moving object 1100 does not leave the lane and normally travels in a corresponding vehicle.

In case that another moving object or an obstacle exists in a front of the moving object, it may control the engine 1106 or the braking system to decelerate the driving moving object, and may control a trajectory, a traveling route, and a steering angle in addition to speed. Alternatively, the controller 1220 may control the traveling of the moving object by generating a necessary control signal according to recognition information of another external environment, such as a traveling lane or a driving signal of the moving object.

In addition to generating its own control signal, the controller 1220 may also control the traveling of the moving object by performing communication with a nearby moving object or a central server and transmitting a command to control peripheral devices through the received information.

In addition, since accurate recognition of the moving object or lane according to the present embodiment may be difficult in case that a location of the camera module 1250 changes or an angle of view changes, the controller 1220 may generate a control signal for controlling to perform calibration of the camera module 1250 to prevent this. Therefore, in the present embodiment, by generating the calibration control signal to the camera module 1250, the controller 1220 may continuously maintain a normal mounting location, a direction, an angle of view, and the like of the camera module 1250 even when a mounting location of the camera module 1250 is changed due to vibration or impact generated by a movement of the autonomous driving moving object 1100. In case that an initial mounting location, a direction, and an angle of view information of the camera module 1250 that are pre-stored, and an initial mounting location, a direction, an angle of view information, and the like of the camera module 1250 measured while the autonomous driving moving object 800 is traveling are changed by a threshold value or more, the controller 1220 may generate the control signal to perform the calibration of the camera module 1250.

In the present embodiment, the controller 1220 may include the memory 1222 and the processor 1224. The processor 1224 may execute software stored in the memory 1222 according to the control signal of the controller 1220. Specifically, the controller 1220 may store data and commands for performing the lane detection method according to the present invention in the memory 1222, and the commands may be executed by the processor 1224 to implement one or more methods disclosed herein.

In this case, the memory 1222 may be stored in a recording medium executable by the nonvolatile processor 1224. The memory 1222 may store software and data through an appropriate internal/external device. The memory 1222 may be configured with random access memory (RAM), read only memory (ROM), a hard disk, and a memory 1222 device connected with a dongle.

The memory 1222 may at least store an Operating system (OS), a user application, and executable commands. The memory 1222 may also store application data and array data structures.

The processor 1224, which is a microprocessor or an appropriate electronic processor, may be a controller, a microcontroller, or a state machine.

The processor 1224 may be implemented as a combination of computing devices, and the computing device may be configured with a digital signal processor, a microprocessor, or an appropriate combination thereof.

Meanwhile, the autonomous driving moving object 1100 may further include the user interface 1108 for a user input with respect to the above-described control device 1200. The user interface 1108 may enable a user to input information with appropriate interaction. For example, it may be implemented as a touch screen, a keypad, or an operation button, and the like. The user interface 1108 may transmit an input or a command to the controller 1220, and the controller 1220 may perform a control operation of the moving object in response to the input or the command.

In addition, the user interface 1108, which is a device outside the autonomous driving moving object 1100, may perform communication with the autonomous driving moving object 1100 through the wireless communication device 1230. For example, the user interface 808 may be linkable with a mobile phone, a tablet, or another computer device.

Furthermore, in the present embodiment, the autonomous driving moving object 1100 has been described as including the engine 1106, but it may also include another type of a propulsion system. For example, the moving object may be operated with electrical energy, and may be operated through hydrogen energy or a hybrid system combining them. Therefore, the controller 1220 may include a propulsion mechanism according to the propulsion system of the autonomous driving moving object 1100 and may provide a control signal according to this to components of each propulsion mechanism.

Hereinafter, a detailed configuration of the control device 1100 according to the present invention according to the present embodiment will be described in more detail with reference to FIG. 12.

A control device 1200 includes a processor 1224. The processor 1224 may be a general-purpose single or multi-chip microprocessor, a dedicated microprocessor, a microcontroller, a programmable gate array, and the like. The processor may be referred to as a central processing unit (CPU). In addition, in the present embodiment, it is possible that the processor 1224 is used as a combination of a plurality of processors.

The control device 1200 also includes memory 1222. The memory 1222 may be any electronic component capable of storing electronic information. The memory 1222 may also include a combination of the memories 1222 in addition to single memory.

Data and commands 1222a for performing a distance measuring method of a distance measuring device according to the present invention may be stored in the memory 1222. When the processor 1224 executes the commands 1222a, all or a portion of the commands 1222a and the data 1222b required for performing a command may be loaded 1224a and 924b onto the processor 1224.

The control device 1200 may include a transmitter 1230a, a receiver 1230b, or a transceiver 1230c for permitting transmission and reception of signals. One or more antennas 1232a and 1232b may be electrically connected to the transmitter 1230a, the receiver 1230b, or each transceiver 1230c, and may further include antennas.

The control device 1200 may include a digital signal processor (DSP) 1270. Through the DSP 1270, the digital signal may be quickly processed by a moving object.

The control device 1200 may include a communication interface 1280. The communication interface 1280 may include one or more ports and/or communication modules for connecting other devices to the control device 1200. The communication interface 1280 may enable a user and the control device 1200 to interact with each other.

Various configurations of the control device 1200 may be connected together by one or more buses 1290, and the buses 1290 may include a power bus, a control signal bus, a state signal bus, a data bus, and the like. Under a control of the processor 1224, configurations may transmit mutual information through the bus 1290 and perform a desired function.

Meanwhile, in various embodiments, the control device 1200 may be related to a gateway for communication with a security cloud. For example, referring to FIG. 12, the control device 1200 may be related to a gateway 1305 for providing information obtained from at least one of components 1301 to 1304 of a vehicle 1300 to a security cloud 1306. For example, the gateway 1305 may be included in the control device 1200. For another example, the gateway 1305 may be configured as a separate device in the vehicle 1300 that is distinguished from the control device 1200. The gateway 1305 connects a network in the vehicle 1300 secured by a software management cloud 1309, the security cloud 1306, and in-car security software 1310, having different networks, to enable communication.

For example, a component 1301 may be a sensor. For example, the sensor may be used to obtain information on at least one of a state of the vehicle 1300 or a state around the vehicle 1300. For example, the component 1301 may include the sensor 1210.

For example, a component 1302 may be electronic control units (ECUs). For example, the ECUs may be used for engine control, transmission control, airbag control, and tire pressure management.

For example, a component 1303 may be an instrument cluster. For example, the instrument cluster may mean a panel located in a front of a driver's seat among dashboards. For example, the instrument cluster may be configured to display information necessary for driving to a driver (or a passenger). For example, the instrument cluster may be used to display at least one of visual elements for indicating a revolutions per minute (or rotates per minute) (RPM) of the engine, visual elements for indicating a speed of the vehicle 1300, visual elements for indicating an amount of remaining fuel, visual elements for indicating a state of a gear, or visual elements for indicating information obtained through the component 1301.

For example, a component 1304 may be a telematics device. For example, the telematics device may mean a device that provides various mobile communication services, such as location information and safe driving in the vehicle 1300 by coupling wireless communication technology and global positioning system (GPS) technology. For example, the telematics device may be used to connect the vehicle 1300 with a driver, a cloud (e.g., the security cloud 1306), and/or a surrounding environment. For example, the telematics device may be configured to support high bandwidth and low latency for 5G NR-standard technology (e.g., V2X technology of the 5G NR, Non-Terrestrial Network (NTN) technology of the 5G NR). For example, the telematics device may be configured to support autonomous driving of the vehicle 1300.

For example, the gateway 1305 may be used to connect a network within the vehicle 1300, and the software management cloud 1309 and the secure cloud 1306, which are a network outside the vehicle. For example, the software management cloud 1309 may be used to update or manage at least one software necessary for traveling and managing the vehicle 1300. For example, the software management cloud 1309 may be linked to the in-car security software installed in the vehicle. For example, the in-car security software 1310 may be used to provide a security function in the vehicle 1300. For example, the in-car security software 1310 may encrypt data transmitted and received through an in-car network using an encryption key obtained from an external authorized server for encryption of the in-car network. In various embodiments, the encryption key used by the in-car security software 1310 may be generated corresponding to vehicle identification information (a vehicle license plate, a vehicle identification number (VIN)) or information (e.g., user identification information) uniquely assigned to each user.

In various embodiments, the gateway 1305 may transmit the data encrypted by the in-car security software 1310 based on the encryption key to the software management cloud 1309 and/or the security cloud 1306. The software management cloud 1309 and/or the security cloud 1306 may identify the data received from which vehicle or which user by decrypting the data encrypted by the encryption key of the in-car security software 1310. For example, since the decryption key is a unique key corresponding to the encryption key, the software management cloud 1309 and/or the security cloud 1306 may identify a transmission entity (e.g., the vehicle or the user) of the data based on the data decrypted through the decryption key.

For example, the gateway 1305 may be configured to support in-car security software 1310 and may be related to the control device 1200. For example, the gateway 1305 may be related to the control device 1200 to support a connection between a client device and the control device 1200 connected to the security cloud 1306. For another example, the gateway 1305 may be related to the control device 1200 to support a connection between a third-party cloud 1308 connected to the security cloud 1306 and the control device 1200. However, it is not limited thereto.

In various embodiments, the gateway 1305 may be used to connect the vehicle 1300 with the software management cloud 1309 to manage operating software of the vehicle 1300. For example, the software management cloud 1309 may monitor whether updating the operating software of the vehicle 1300 is required, and based on monitoring that the updating the operating software of the vehicle 1300 is required, provide data for the updating the operating software of the vehicle 1300 through the gateway 1305. For another example, the software management cloud 1309 may receive a user request for updating the operating software of the vehicle 1300 from the vehicle 1300 through the gateway 1305, and provide data for updating the operating software of the vehicle 1300 based on the reception. However, it is not limited thereto.

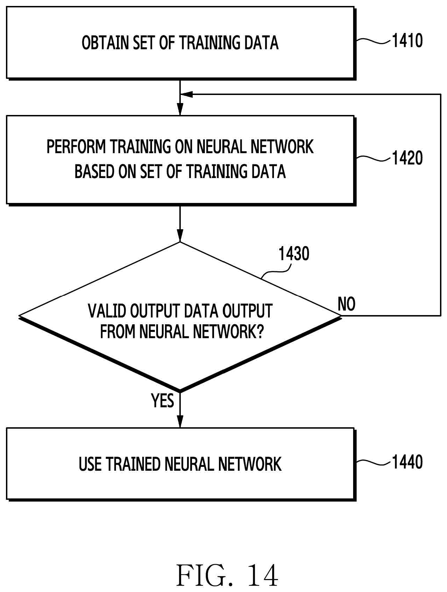

FIG. 14 is a diagram for explaining an operation of an electronic device for training a neural network based on a set of learning data, according to an embodiment.

An operation described with reference to FIG. 14 may be performed by the above-described electronic device (e.g., the electronic device 200 of FIG. 2).

Referring to FIG. 14, in operation 1410, the electronic device may obtain the set of the learning data according to an embodiment. The electronic device may obtain the set of the learning data for supervised learning. The learning data may include a pair of input data and ground truth data corresponding to the input data. The ground truth data may indicate output data to be obtained from the neural network that has received the input data, which is the pair of the ground truth data. The ground truth data may be obtained by the electronic device described above.

For example, in case of training the neural network for image recognition, the learning data may include information regarding an image and one or more subjects included within the image. The information may include a category (or a class) of a subject identifiable through the image. The information may include a location, a width, a height, and/or a size of a visual object corresponding to the subject within the image. The set of the learning data identified through the operation 1410 may include pairs of a plurality of learning data. In the example of training the neural network for the image recognition, the set of the learning data identified by the electronic device may include a plurality of images and ground truth data corresponding to each of the plurality of images.

Referring to FIG. 14, in operation 1420, the electronic device according to an embodiment may perform training on the neural network based on the set of the learning data. In an embodiment in which the neural network is trained based on the supervised learning, the electronic device may input the input data included in the learning data to an input layer of the neural network. An example of the neural network including the input layer will be described with reference to FIG. 10. From an output layer of the neural network receiving the input data through the input layer, the electronic device may obtain output data of the neural network corresponding to the input data.

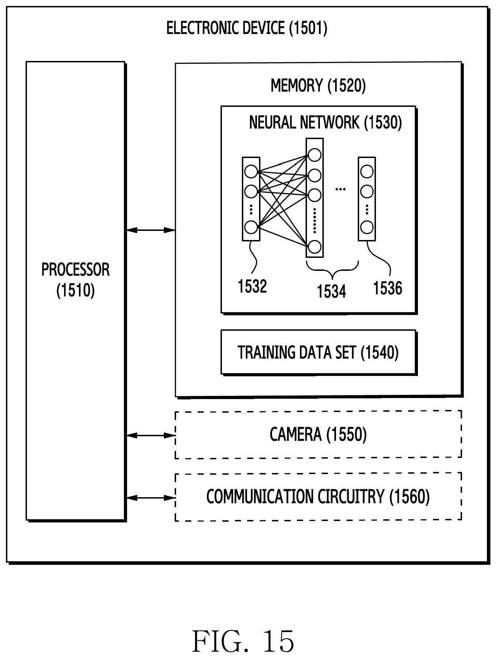

In an embodiment, the training of the operation 1420 may be performed based on a difference between the output data and the ground truth data included in the learning data and corresponding to the input data. For example, the electronic device may adjust one or more parameters related to the neural network (e.g., a weight to be described later with reference to FIG. 15) to reduce the difference based on a gradient descent algorithm. An operation of the electronic device adjusting the one or more parameters may be referred to as tuning for the neural network. The electronic device may perform the tuning of the neural network based on the output data using a function defined to evaluate performance of the neural network, such as a cost function. The difference between the output data and the ground truth data may be included as an example of the cost function.

Referring to FIG. 14, in operation 1430, according to an embodiment, the electronic device may identify whether valid output data is outputted from the neural network trained by the operation 1420. The output data being valid may mean that the difference (or the cost function) between the output data and the ground truth data satisfies a condition set for use of the neural network. For example, in case that an average value and/or the maximum value of the difference between the output data and the ground truth data is less than or equal to a designated threshold value, the electronic device may determine that the valid output data is outputted from the neural network.

In case that the valid output data is not outputted from the neural network (1430-NO), the electronic device may repeatedly perform training of the neural network based on the operation 1420. An embodiment is not limited thereto, and the electronic device may repeatedly perform the operations 1420 and 1430.

In a state in which the valid output data is obtained from the neural network (1430-YES), based on operation 1440, the electronic device according to an embodiment may use the trained neural network. For example, the electronic device may input other input data to the neural network that is distinct from the input data inputted to the neural network as the learning data. The electronic device may use output data obtained from the neural network receiving the other input data as a result of performing inference on the other input data based on the neural network.

FIG. 15 is a block diagram of an electronic device according to an embodiment.

An electronic device 501 of FIG. 15 may include the above-described electronic device (e.g., the electronic device 200 of FIG. 2).

For example, an operation described with reference to FIG. 14 may be performed by the electronic device 501 of FIG. 15 and/or a processor 1510 of FIG. 15.

Referring to FIG. 15, the processor 1510 of the electronic device 501 may perform computations related to a neural network 1530 stored in memory 1520. The processor 1510 may include at least one of a center processing unit (CPU), a graphic processing unit (GPU), and a neural processing unit (NPU). The NPU may be implemented as a chip separated from the CPU, or integrated into a chip such as the CPU in a form of a system on a chip (SoC). The NPU integrated into the CPU may be referred to as a neural core and/or an artificial intelligence (AI) accelerator.

Referring to FIG. 15, the processor 1510 may identify the neural network 1530 stored in the memory 1520. The neural network 1530 may include a combination of an input layer 1532, one or more hidden layers 1534 (or intermediate layers), and an output layer 1536. The above-described layers (e.g., the input layer 1532, the one or more hidden layers 1534, and the output layer 1536) may include a plurality of nodes. The number of hidden layers 1534 may vary according to an embodiment, and the neural network 1530 including the plurality of hidden layers 1534 may be referred to as a deep neural network. An operation of training the deep neural network may be referred to as deep learning.

In an embodiment, in case that the neural network 1530 has a structure of a feed forward neural network, a first node included in a specific layer may be connected to all of second nodes included in another layer before the specific layer. In the memory 1520, parameters stored for the neural network 1530 may include weights assigned to connections between the second nodes and the first node. In the neural network 1530 having the structure of the feed forward neural network, a value of the first node may correspond to a weighted sum of values assigned to the second nodes, based on the weights assigned to the connections connecting the second nodes and the first node.

In an embodiment, in case that the neural network 1530 has a structure of a convolutional neural network, the first node included in the specific layer may correspond to a weighted sum of a portion of the second nodes included in the other layer before the specific layer. The portion of the second nodes corresponding to the first node may be identified by a filter corresponding to the specific layer. In the memory 1520, the parameters stored for the neural network 1530 may include weights indicating the filter. The filter may include, among the second nodes, one or more nodes to be used to calculate a weighted sum of the first node, and weights corresponding to each of the one or more nodes.

According to an embodiment, the processor 1510 of the electronic device 501 may perform training on the neural network 1530 using a learning data set 1540 stored in the memory 1520. Based on the learning data set 1540, the processor 1510 may adjust one or more parameters stored in the memory 1520 for the neural network 1530 by performing the operation described with reference to FIG. 14.

According to an embodiment, the processor 1510 of the electronic device 501 may perform object detection, object recognition, and/or object classification using the neural network 1530 trained based on the learning data set 1540. The processor 1510 may input an image (or a video) obtained through a camera 1550 into the input layer 1532 of the neural network 1530. Based on the input layer 1532 to which the image is inputted, the processor 1510 may obtain a set (e.g., the output data) of values of the nodes of the output layer 1536 by sequentially obtaining values of the nodes of the layers included in the neural network 1530. The output data may be used as a result of inferring information included in the image using the neural network 1530. An embodiment is not limited thereto, and the processor 1510 may input an image (or a video) obtained from an external electronic device connected to the electronic device 501 through communication circuitry 1560 to the neural network 1530.

In an embodiment, the neural network 1530 trained to process an image may be used to identify a region corresponding to a subject within the image (object detection), and/or to identify a class of the subject represented within the image (object recognition and/or object classification). For example, the electronic device 501 may segment the region corresponding to the subject within the image based on a quadrangle shape such as a bounding box, using the neural network 1530. For example, the electronic device 501 may identify at least one class matching the subject among a plurality of designated classes using the neural network 1530.

As described above, an electronic device 200 may comprise a camera 230. The electronic device 200 may comprise memory 220. The electronic device 200 may comprise a processor 210. The processor 210 may be configured to obtain an image 511 using the camera 230. The processor 210 may be configured to obtain spatial information regarding an external space at a time when the image 511 is obtained using the image 511. The processor 210 may be configured to obtain state information regarding an object included in the external space using the spatial information. The processor 210 may be configured to obtain a first text describing a motion of the object by executing a first language model 541 using the state information. The processor 210 may be configured to obtain a second text describing the image 511 by executing a second language model 542 using the first text and the image 511.

The processor 210 may be configured to generate driving information for controlling a vehicle 310 using the second text.

The processor 210 may be configured to generate guidance information for notifying a user of an anomaly by the object using the second text.

The electronic device may comprise a speaker 240. The processor 210 may be configured to control the speaker 240 using the guidance information.

The processor 210 may be configured to identify a feature of the object using the spatial information. The processor 210 may be configured to obtain the state information of the object based on the feature.

The feature may comprise a shape of the object and a speed of the object.

The state information may comprise at least one of a location of the object, a movement trajectory of the object, an operation of the object, and a size of the object.

The processor 210 may be configured to obtain a third text for reducing an error between the first text and the second text by executing the first language model 541 using the second text. The processor 210 may be configured to obtain a fourth text describing the image 511 by executing the second language model 542 using the third text and the image 511.

The processor 210 may be configured to obtain sensing data 513 using the at least one sensor 250. The processor 210 may be configured to obtain the spatial information using the image 511and the sensing data 513.

The processor 210 may be configured to identify a user input. The processor 210 may be configured to generate information for controlling a vehicle 310 using the user input and the second text.

The electronic device 200 may comprise a microphone 251. The processor 210 may be configured to receive the user input through the microphone 251.

The first language model 541 may comprise a physics-informed model for predicting the motion of the object from the state information regarding the object.

As described above, in a method executed by an electronic device 200 including a camera 230, the method may comprise obtaining an image 511 using the camera 230. The method may comprise obtaining spatial information regarding an external space at a time when the image 511 is obtained using the image 511. The method may comprise obtaining state information regarding an object included in the external space using the spatial information. The method may comprise obtaining a first text describing a motion of the object by executing a first language model 541 using the state information. The method may comprise obtaining a second text describing the image 511 by executing a second language model 542 using the first text and the image 511.

The method may comprise generating driving information for controlling a vehicle 310 using the second text.

The method may comprise generating guidance information for notifying a user of an anomaly by the object using the second text.

The method may comprise identifying a feature of the object using the spatial information. The method may comprise obtaining the state information of the object based on the feature.

The method may comprise obtaining a third text for reducing an error between the first text and the second text by executing the first language model 541 using the second text. The method may comprise obtaining a fourth text describing the image 511 by executing the second language model 542 using the third text and the image 511.

The electronic device 200 may comprise at least one sensor 250. The method may comprise obtain sensing data 513 using the at least one sensor 250. The method may comprise obtain the spatial information using the image 511 and the sensing data 513.

The method may comprise identifying a user input. The method may comprise generating information for controlling a vehicle 310 using the user input and the second text.

As described above, in a non-transitory computer readable storage medium storing one or more programs, the one or more programs may comprise instructions to, when executed by a processor 210 of an electronic device 200 including a camera 230, cause the electronic device 200 to obtain an image 511 using the camera 230. The one or more programs may comprise instructions to, when executed by the processor 210, cause the electronic device 200 to obtain spatial information regarding an external space at a time when the image 511 is obtained using the image 511. The one or more programs may comprise instructions to, when executed by the processor 210, cause the electronic device 200 to obtain state information regarding an object included in the external space using the spatial information. The one or more programs may comprise instructions to, when executed by the processor 210, cause the electronic device 200 to obtain a first text describing a motion of the object by executing a first language model 541 using the state information. The one or more programs may comprise instructions to, when executed by the processor 210, cause the electronic device 200 to obtain a second text describing the image 511 by executing a second language model 542 using the first text and the image 511.

## Claims

1. An electronic device (200) comprising:
a camera (230);
memory (220); and
a processor (210) configured to:
obtain an image (511) using the camera (230);
obtain spatial information regarding an external space at a time when the image (511) is obtained using the image (511);
obtain state information regarding an object included in the external space using the spatial information;
obtain a first text describing a motion of the object by executing a first language model (541) using the state information; and
obtain a second text describing the image (511) by executing a second language model (542) using the first text and the image (511).

2. The electronic device (200) of claim 1,
wherein the processor (210) is configured to generate driving information for controlling a vehicle (310) using the second text.

3. The electronic device (200) of claim 1,
wherein the processor (210) is configured to generate guidance information for notifying a user of an anomaly by the object using the second text.

4. The electronic device (200) of claim 3, comprising:
a speaker (240), and
wherein the processor (210) is configured to:
control the speaker (240) using the guidance information.

5. The electronic device (200) of claim 1,
wherein the processor (210) is configured to:
identify a feature of the object using the spatial information, and
obtain the state information of the object based on the feature.

6. The electronic device (200) of claim 5,
wherein the feature comprises a shape of the object and a speed of the object.

7. The electronic device (200) of claim 5,
wherein the state information comprises at least one of a location of the object, a movement trajectory of the object, an operation of the object, and a size of the object.

8. The electronic device (200) of claim 1,
wherein the processor (210) is configured to:
obtain a third text for reducing an error between the first text and the second text by executing the first language model (541) using the second text, and
obtain a fourth text describing the image (511) by executing the second language model (542) using the third text and the image (511).

9. The electronic device (200) of claim 1, comprising:
at least one sensor (250),
wherein the processor (210) is configured to:
obtain sensing data using the at least one sensor (250), and
obtain the spatial information using the image (511) and the sensing data.

10. The electronic device (200) of claim 1,
wherein the processor (210) is configured to:
identify a user input, and
generate information for controlling a vehicle (310) using the user input and the second text.

11. The electronic device (200) of claim 10, comprising:
a microphone (251),
wherein the processor (210) is configured to receive the user input through the microphone (251).

12. The electronic device (200) of claim 1,
wherein the first language model (541) comprises a physics-informed model for predicting the motion of the object from the state information regarding the object.

13. A method executed by an electronic device (200) including a camera (230), the method comprising:
obtaining an image (511) using the camera (230);
obtaining spatial information regarding an external space at a time when the image (511) is obtained using the image (511);
obtaining state information regarding an object included in the external space using the spatial information;
obtaining a first text describing a motion of the object by executing a first language model (541) using the state information; and
obtaining a second text describing the image (511) by executing a second language model (542) using the first text and the image (511).

14. The method of claim 13, comprising:
generating driving information for controlling a vehicle (310) using the second text.

15. The method of claim 13, comprising:
generating guidance information for notifying a user of an anomaly by the object using the second text.
